# EUROPEAN PATENT APPLICATION

(11) **EP 4 657 833 A1**
(43) Date of publication of application: **03.12.2025**
(21) Application number: 25174819.0
(22) Date of filing: 07.05.2025
(51) Int. Cl.: H04L 67/12, B60L 58/10, B60L 58/12, B60L 58/18, H04W 88/18, H01M 10/42

(54) **PROXY BROADCAST IN WIRELESS BATTERY MANAGEMENT**

(30) Priority: 29.05.2024 US 202418677694
(71) Applicant: Analog Devices International Unlimited Company, Co. Limerick (IE)
(72) Inventor: DOHERTY, Lance Robert, Limerick (IE); HASSAN, Khaled, Limerick (IE)
(74) Representative: Horler, Philip John

(57) **Abstract**

Proxy broadcasting techniques for a wireless battery management system can improve communication performance by designating a subset of clusters to serve as proxy broadcasters for another subset of clusters that are experiencing issues with reliably receiving control data from network managers. The techniques can include having two network managers broadcasting the control data in specified portions of a timeslot. The designated proxy broadcasters can receive the control data in a first portion of a timeslot and transmit the received control data to bad clusters in a second portion of the same timeslot.

## Description

This application claims priority from US patent application no. 18/677,694 filed 29 May 2024.

### TECHNICAL FIELD

The present disclosure generally relates to a wireless Battery Management System (WBMS), in particular rebroadcasting techniques of control data.

### BACKGROUND

Electric cars have been gaining immense popularity. One factor facilitating adoption of electric vehicles has been improvement in battery management. Using a WBMS, electric cars may monitor battery levels and communicate that information to a control unit, which in turn can operate the car more reliably and efficiently. In some scenarios, the control unit may transmit control data to different battery modules at a high frequency to control battery operations.

### SUMMARY

This document describes a method for proxy broadcasting in a wireless battery management system, the method comprising: transmitting, by a first manager, control data in a first portion of a timeslot to a plurality of battery clusters on a first channel; receiving, by a first battery cluster of the plurality of battery clusters, the control data from the first manager in the first portion of the timeslot on the first channel; transmitting, by the first battery cluster, the control data to a second battery cluster of the plurality of battery clusters in a second portion of the timeslot on a second channel; and receiving, by a second battery cluster of the plurality of battery clusters, the control data from the first battery cluster in the second portion of the timeslot on the second channel.

This document also describes a wireless battery management system comprising: a first manager to transmit control data in a first portion of a timeslot to a plurality of battery clusters on a first channel; a first battery cluster of the plurality battery clusters to transmit the control data to a second battery cluster of the plurality of battery clusters in a second portion of the timeslot on a second channel; and the second battery cluster to receive the control data from the first battery cluster in the second portion of the timeslot on the second channel.

This document further describes a wireless battery node comprising: at least one hardware processor; and at least one memory storing instructions that, when executed by the at least one hardware processor, cause the at least one hardware processor to perform operations comprising: receiving control data from a first manager in a first portion of a timeslot on a first channel; and transmitting the control data to a second battery node in a second portion of the timeslot on a second channel.

### BRIEF DESCRIPTION OF THE DRAWINGS

Various ones of the appended drawings merely illustrate example embodiments of the present disclosure and should not be considered as limiting its scope.
FIG. 1 illustrates a block diagram of a wireless battery management system (WBMS).
FIG. 2 illustrates a block diagram of a WBMS for communicating control data.
FIG. 3 illustrates a block diagram of a WBMS for proxy broadcasting.
FIG. 4 illustrates an example of a timeslot for proxy broadcasting.
FIG. 5 shows example portions of a communication schedule for proxy broadcasting.
FIG. 6 shows example portions of a communication schedule for proxy broadcasting.

### DETAILED DESCRIPTION

As mentioned above, a control unit may transmit control data to a plurality of battery clusters. For example, some electric vehicles can use an alternating current (AC) battery system. AC battery systems can include a plurality of battery clusters (e.g., 50 - 150 clusters) with each cluster including switches to generate a discretized AC waveform. The clusters can also include microprocessor to run a switching algorithm and a communication link to receive control data including updates to switching timing. The updates for the switching timing may be transmitted at a high frequency (e.g., every 1 millisecond). Each cluster receives the updates to control switching and reception failures of the switching time information can lead to battery malfunctions.

Some clusters may experience radio frequency (RF) interference or significant path loss due to obstructions and absorbing elements and may not reliably receive information from a network manager. Also, the spatial layout of the battery pack makes it that some clusters are closer to peer clusters than a network manager. Proxy broadcasting techniques described herein can improve communication performance by designating a subset of clusters to serve as proxy broadcasters for another subset of clusters ("bad" clusters) that are experiencing issues with reliably receiving control data from network managers. The techniques can include having two network managers broadcasting the control data in specified portions of a timeslot. The designated proxy broadcasters can receive the control data in a first portion of a timeslot and re-transmit the received control data to bad clusters in a second portion of the same timeslot.

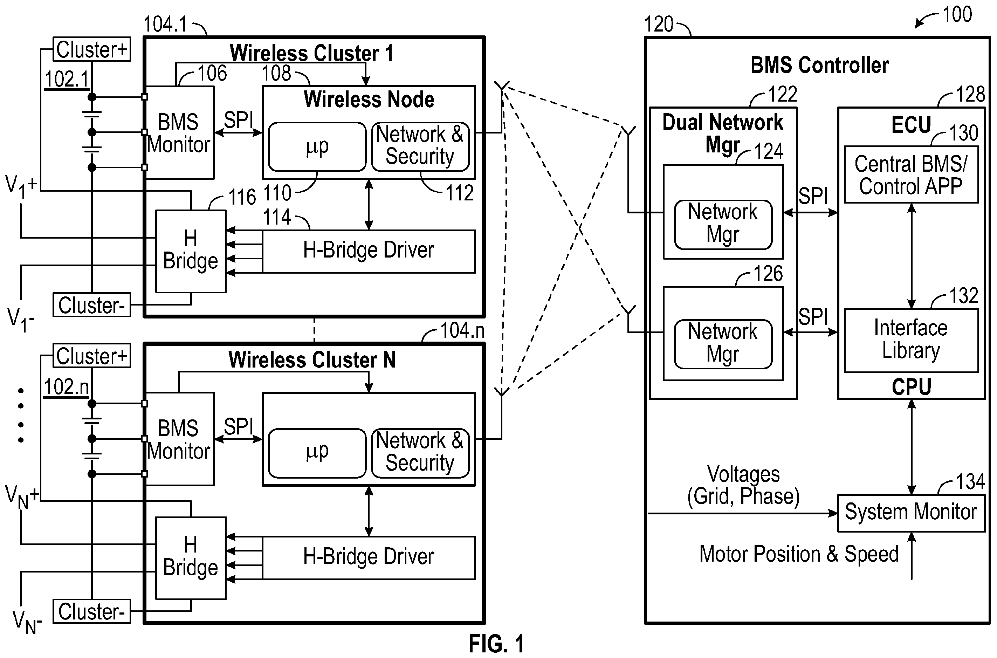

FIG. 1 illustrates a block diagram of a WBMS 100. The WBMS 100 may include a plurality of battery modules 102.1-102.n, each including a plurality of battery cells. For example, the battery modules 102.1-102.n may include high energy cells comprised of lithium-ion, sodium-ion, or solid-state materials. Batteries with different specifications, sizes, and shapes may be used. Each module may be coupled to a respective wireless cluster 104.1-104.n. The WBMS 100 may also include a BMS controller 120 with a dual network manager 122 and an Electronic Control Unit (ECU) 128.

Each cluster 104.1-104.n may include one or more BMS monitors 106 and a wireless node 108. The BMS monitor 106 may be coupled to a battery module and may monitor various conditions or properties of the battery module. The BMS monitor 106 may be provided as an integrated circuit, which can include a monolithically integrated BMS circuit or an integrated module including multiple integrated circuit die or other circuit elements within a commonly-shared integrated circuit device package, as illustrative examples.

The BMS monitor 106 may include a variety of sensors. The BMS monitor 106 may sample the battery voltage to monitor the battery level. The BMS monitor may also monitor current of the battery module and the external surface temperature.

The BMS monitor 106 may be coupled to the wireless node 108 by a communication interface, for example by a Serial Peripheral Interface (SPI) or the like. The BMS monitor 106 and the wireless node 108 may be provided on a single printed circuit board (PCB). The wireless node 108 may include wireless system on chip (SoC), which may include a radio transceiver to communicate with the dual network manager 122 over a wireless network.

The wireless node 108 may include a microprocessor 110 and a network security module 112. The microprocessor 110 may run switching algorithm based on control information received from the dual network manager 122. The wireless node 108 may include a memory (not shown) to store the switching algorithm and other information for operating the wireless node 108. The network security module 112 may encrypt and decrypt communication between the wireless node 108 and the dual network manager 122.

The wireless clusters 104.1-104.n may include an H-bridge drive circuit 114 and a H bridge 116. The H-bridge drive circuit 114 may be coupled to the wireless node 108. For example, the microprocessor 110 may transmit H-bridge control data to the H-bridge drive circuit 114 based on the received control information from the dual network manager 122 and the switching algorithm. The H-bridge drive circuit 114 may, in turn, generate drive signals to control the H bridge 116 to provide different voltage levels (also referred to as independent states), VN+, 0, VN-. The different voltage levels may be used to generate the discretized AC waveform. A zero voltage may be provided when the respective wireless cluster is in bypass mode. For example, if a cluster does not receive control information for a time period (e.g., 5 milliseconds), the cluster may automatically transition into bypass mode as a safety measure.

Wireless clusters 104.1-104.n may communicate with each other and with the dual network manager 122 over a wireless network. The wireless network may be provided as a mesh network or the like. The wireless network may be provided using short range wireless communication networks, for example at ~2.4 GHz, using time-synchronous channel hopping (TSCH). The dual network manager 122 may act like a central node and the wireless clusters 104.1-104.n may act like peripheral nodes. If a wireless cluster 104.1-104.n is released by the dual network manager 122 or is disconnected, it may search for a new network manager. The wireless network may be a secure network. For example, before the wireless cluster 104.1-104.n communicates with a new network manager, a secure connection may be established by using, for example, a certificate validation.

The dual network manager 122 may include a first manager 124 and a second manager 126 to communicate with the wireless clusters 104.1-104.n. The first manager 124 and second manager 126 may be provided as wireless SOCs.

The network manager 122 may be coupled to the ECU 128 via a communication interface, such as SPI. The ECU 128 may include a Central BMS/Control app 130 and interface library 132 to control operation of the WBMS 100. The ECU may be coupled to a system monitor 134. The system monitor 134 may receive vehicle and motor information, such as motor position and speed.

The ECU 128 may generate control data for operating the different wireless clusters 104.1-104.n to generate the discretized AC waveform based on the vehicle and motor information. The WBMS 100 may change the properties of the discretized AC waveform based on the current driving conditions. The frequency and amplitude of the discretized waveform (e.g., sine wave) can be adjusted based on the vehicle and motor information. For example, torque of the vehicle may correspond to a high amplitude where a large set (e.g., all) the clusters are operating, that is cycling among their positive, zero, and negative contributions in sequence. On the other hand, if the vehicle is pulling into a parking space, only a small set of clusters, such as one cluster, may be turned on for the littler power needed by the vehicle with the other clusters held in their zero voltage state. Amplitude of the AC waveform can control the torque, leading to acceleration, and frequency of the AC waveform can control the motor speed.

The dual network manager 122 may transmit the control data to the wireless clusters 104.1-104.n in a periodic manner. Indeed, the control data may be transmitted to the wireless clusters 104.1-104.n on a very frequent basis for the AC battery operation, such as every 1 millisecond.

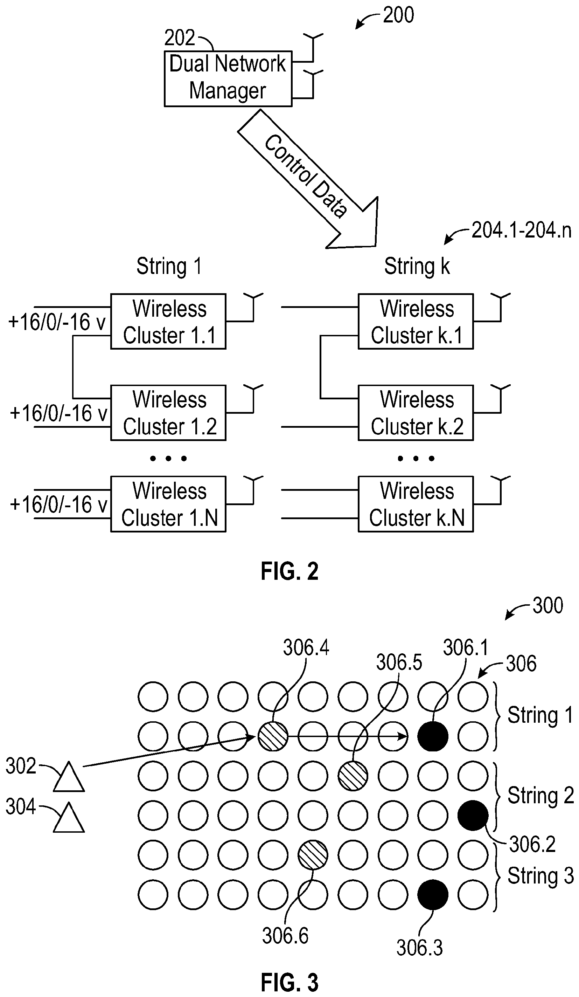

FIG. 2 illustrates a block diagram of a WBMS 200 for communicating control data. The WBMS 200 includes a dual network manager 202. The WBMS 200 includes a plurality of wireless clusters 204.1-204.n arranged in strings 1-k. For example, the wireless clusters 204-1-204.n may generate a discretized AC waveform for an electric motor, such as a three-phase motor. In this case, three strings may be provided (e.g., k = 3), where each string generates a discretized sine wave 120 degrees out of phase based on the control data received from the dual network manager 202. Each string may include a N number of wireless clusters. For example, each string may include eighteen wireless clusters (e.g., N = 18) for a total of fifty-four clusters (e.g., n = 54). In this example, the clusters may generate different voltage levels, such as +16 V, 0 V, -16 V.

The dual network manager 202 may transmit control data periodically, such as every 1 millisecond or shorter. For proper operation of the battery, the control data must reliably be received by the wireless clusters 204.1-204.n. To improve reliability, redundancy in the wireless communication may be utilized. The dual network manager 202 may transmit the same control data multiple times in the same timeslot. For example, a first manager may transmit the control data on a first channel in a first portion of a timeslot, and a second manager may transmit the same control data on a second channel in a second portion of the timeslot. In some examples, the first manager and the second manager may transmit the control data in the same portion of the timeslot on different channels, such as different frequencies of a TSCH scheme. The redundancy in the transmission of the control data may improve reliability of the communication and hence the efficiency of the battery operation.

However, even with the added redundancy of transmission of the control data from multiple network managers, the physical properties of the spatial layout of the battery pack may make it that some wireless clusters still cannot reliably receive the control data from the network managers. To add more redundancy, the WBMS may designate some wireless clusters to act as proxy broadcasters for retransmitting the control data to "bad" clusters that less frequently receive the control data from the network managers.

FIG. 3 illustrates a block diagram of a WBMS 300 for proxy broadcasting. The WBMS 300 includes a first manager 302, a second manager 304, and a plurality of wireless clusters 306. In this example, the WBMS 300 may determine that clusters 306.1, 306.2, 306.3 are "bad" clusters in that they are not reliably receiving the control data from the first manager 302 and the second manager 304.

In some examples, the wireless clusters can self-determine whether they are bad clusters. For example, knowing the operating frequency of the WBMS 300, the wireless clusters can dynamically self-determine their status of either bad or not by self-monitoring their link reliability, such as Packet Delivery Ratio, relative to the two managers in comparison to a predefined condition. For example, at 1 ms operating frequency, all wireless clusters expecting a control message from one of the managers every 1 ms, and if any of the wireless clusters do not receive the control message, for example, for 3 ms, that respective cluster may change their status to a bad cluster.

The bad cluster determination may also be performed prior to network deployment by studying offline the wireless environment within a battery pack and assessing the link reliability between all the wireless clusters and the dual manager, identifying the wireless clusters with the weakest links to the two managers.

Another approach for determining the bad proxies may be performed as part of a background ongoing discovery process in which each cluster monitors the link reliability, such as received signal strength indicator RSSI, towards the two managers. This information may be transmitted to the network manager to determine the bad proxies with the weakest links towards the two managers.

The WBMS 300 may then designate a subset of clusters as proxy broadcasters for the bad clusters. For example, clusters 306.4, 306.5, 306.6 may be designated as proxy broadcasters. The proxy broadcasters 306.4, 306.5, 306.6 may receive the control data from the first manager 302 (and/or second manager 304) in a first portion of a timeslot. The proxy broadcasters 306.4, 306.5, 306.6 may store the control data in a buffer. In the second portion of the timeslot, the proxy broadcasters 306.4, 306.5, 306.6 may transmit the control data to the bad clusters 306.1, 306.2, 306.3.

In some examples, the proxy broadcasters 306.4, 306.5, 306.6 may transmit the control data on the same channel (f1), for example, of a TSCH scheme. In this case, the bad clusters 306.1, 306.2, 306.3 may be all tuned to receive the control data on the same channel f1 in the second portion of the timeslot.

In some examples, the proxy broadcaster 306.4, 306.5, 306.6 may transmit the control data on the different channels targeted to different one or more bad clusters. For example, proxy broadcaster 306.4 may transmit the control data on a first channel (f1) in the second portion of the timeslot targeted for bad cluster 306.1. That is, bad cluster 306.1 may tune its system to the first channel f1 to receive the control data in the second portion of the timeslot. Proxy broadcaster 306.5 may transmit the control data on a second channel (f2) in the second portion of the timeslot targeted for bad cluster 306.2. That is, bad cluster 306.2 may tune its system to the second channel f2 to receive the control data in the second portion of the timeslot. Proxy broadcaster 306.6 may transmit the control data on a third channel (f3) in the second portion of the timeslot targeted for bad cluster 306.3. That is, bad cluster 306.3 may tune its system to the third channel f3 to receive the control data in the second portion of the timeslot.

The process of determining the proxy broadcasters may follow similar approaches such as the ones abovementioned to identify bad clusters. Reliable communication for a bad cluster is ensured by choosing a proxy broadcaster with strong reliable links to both the network managers and to the bad cluster itself.

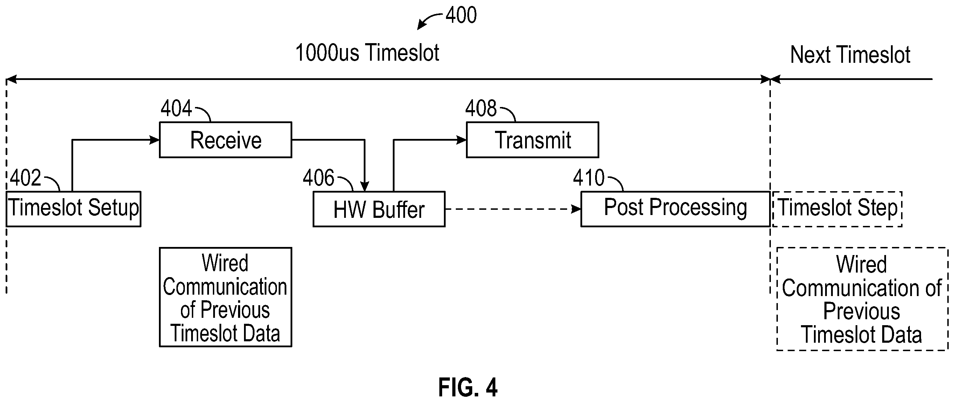

FIG. 4 illustrates an example of a timeslot 400 for proxy broadcasting. In FIG. 4, the use of timeslot 400 is from a perspective of wireless cluster designated as a proxy broadcaster. In this example, the timeslot 400 is about 1 millisecond (or 1000 us); however, other durations of the timeslot can be used, such as timeslots shorter than 1 millisecond. The dual network manager may receive the control data to transmit in timeslot 400 in the previous timeslot from the ECU using a wired connection, such as SPI.

The timeslot 400 includes a timeslot setup 402 in the beginning of the timeslot. This timeslot setup 402 is shared by all other portions of the timeslot communications allowing multiple portions to be used for different communication actions. Prior to sending data in a timeslot, several steps are performed including obtaining the data to send from an external source, such as ECU 128, and powering up and configuring the transceiver. These operations for setup involve software control and hence not completely deterministic so the setup time is buffered against worst case performance. Each timeslot includes its own respective timeslot setup. Therefore, using different portions of a timeslot to communicate control data multiple times is different and more efficient than communicating the control data multiple times in successive timeslots.

The timeslot 400 includes a receive portion 404 (i.e., a first portion). The wireless cluster, for example, may receive control data from a first manager during the receive portion 404. During this time, wireless cluster may transmit the contents of the control data received in the previous timeslot to respective components, such as H-bride driver or BMS monitor.

The wireless cluster can store the received control data in the receive portion 404 in a hardware (HW) buffer 406. This step is important to the proxy broadcaster operation as these devices are responsible for both receiving and retransmitting data during the same timeslot. Performing the retransmitting operation in dedicated HW speeds up the process. For example, The exact same content received is retransmitted without alteration and no software processing is needed. Software processing of the data, including changing content and headers, often adds significant delays that can also be non-deterministic. The HW buffer 406 is relatively shorter than the software-driven timeslot setup 402.

The timeslot 400 includes a transmit portion 408 (i.e., a second portion). The wireless cluster may transmit the control data stored in the HW buffer 406 received in the receive portion 404 to a bad cluster. As a timesaving measure, this transmission can occur on the same frequency as the receive portion 404 which removes the time needed for the transceiver oscillator to be tuned to a new frequency.

The timeslot 400 includes a post portion 410 for processing to prepare for communication in the next timeslot. In some examples, the post portion 400 can start during the transmit portion 408. That is, once the radio components are engaged with the transmit portion 408, the processor can start post processing in the post portion 410. This post processing often uses software intervention and hence may be sized appropriately for worst case timing. The next timeslot may then begin with its respective timeslot setup, as discussed above.

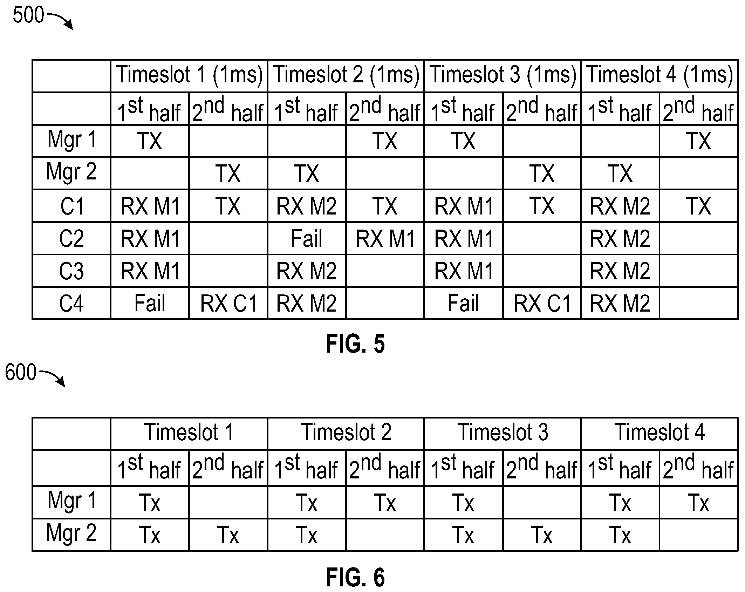

FIG. 5 shows example portions of a communication schedule 500 for proxy broadcasting. The communication schedule shows communications for a first manager (Mgr 1), a second manager (Mgr 2), and four clusters (C1-C4) for simplicity and brevity.

In the first portion (1^{st} half) of timeslot 1, Mgr1 transmits control data. For example, the Mg1 may transmit the control data on a first channel, such as a first frequency of a TSCH scheme, to which the clusters C1-C4 are listening in the first portion of timeslot 1. While clusters C1-C3 successfully receive the control data in the first portion of timeslot 1, cluster C4 fails in receiving the control data.

In the second portion (2^{nd} half) of timeslot 1, Mgr 2 transmits the control data, which is the same control data transmitted by Mgr 1 in first portion. For example, the Mgr 2 transmits the control data on a second channel. In some examples, clusters C1-C4 may listen to the second channel to receive the control data from Mgr 2 if they did not successfully receive the control data in the first portion from Mgr 1. In this example, C1 is designated as a proxy broadcaster. C1 may transmit the control data, which it received from Mgr 1 in the first portion, in the second portion of timeslot 1. In some examples, C1 may transmit the control data on the second channel, which is the same channel as Mgr 2 transmits the control data at substantially the same time in the second portion (i.e., concurrent transmissions). In some other examples, C1 may transmit the control on a different channel, such as a third channel, and C4 may listen to the third channel in the second portion to receive the control data from C1.

While FIG. 5 shows a single proxy cluster C1, the same methodology extends to multiple proxies. In the case of multiple proxies, the retransmission in the second half of the timeslot can either be separated by a single frequency per proxy or all proxies can transmit concurrently on the same frequency. In the former case, the number of proxies that can be supported is equal to the number of non-overlapping frequencies available in the wireless band used.

The managers may alternate their transmissions in adjacent timeslots. Since Mgr1 transmitted in the first portion of timeslot 1, Mgr 2 may transmit in the first portion of timeslot 2. In this example, C1, C3, and C4 successfully receive the control data in the first portion of timeslot 2 from Mgr2. C2 fails in receiving the control data in the first portion of timeslot 2. In the second portion of timeslot 2, Mgr 1 transmits the control data. Since C1 is designated as a proxy broadcaster, C1 may transmit the control data, which it received from Mgr 1 in the first portion, in the second portion of timeslot 2. C2, which failed to receive the control data in the first portion, may receive the control data from Mgr1 in the second portion. In some other examples, C2 may have received the control data from the proxy broadcaster C1.

Timeslot 3 may operate similarly to timeslot 1. Timeslot 4 may operate similarly to timeslot 1, with the exception that all clusters C1-C4 may successfully receive the control data in the first portion from Mgr2. C1 may nonetheless transmit the control data in the second portion because it is a designated proxy broadcaster.

The classification of a wireless cluster to a proxy broadcaster, a bad cluster, or neither determines its network schedule and what a wireless cluster should do in the two portions of a timeslot in terms of radio activities either receive, transmit or nothing.

From FIG. 5 example, C2 and C3 are neither proxy broadcaster nor bad clusters and, thus, they tune their reception only to the transmission from the managers. These clusters C2 and C3 receive in the first portion of a timeslot and receive in the second half of a timeslot if the reception in the first portion fails. However, C4 is a bad cluster and, thus, it tunes its reception to the managers transmissions only in the first portion of a timeslot and to the proxy transmissions in the second portion of a timeslot if the reception in the first portion fails. On the other hand, C1 is a proxy broadcaster and its network schedule composes of a receive in the first portion of a timeslot from one of the managers and a transmit in the second portion of a timeslot if the receive in the first portion succeeds.

In communication schedule 500, the managers alternate their transmission in the first and second portions. However, even more communication redundancy can be added. FIG. 6 shows example portions of a communication schedule 600 for proxy broadcasting. Here, both managers (Mgr 1 and Mgr 2) may transmit in the first portions of timeslots, and the managers may alternate the transmission in the second portions in successive timeslots.

For example, in the first portion of timeslot 1, both managers may transmit the control data. In some examples, both managers may transmit on the same channel (i.e., concurrent transmissions). In some other examples, the managers may transmit on different channels. Each designated proxy broadcaster (not shown) may tune its channel reception to pick the transmission with the higher reception probability based on monitoring the link reliability per manager per channel in the past transmissions.

In the second portion of timeslot 1, Mgr 2 may transmit the control data. Designated proxy broadcasters (not shown) may also transmit the control data in the second portion of timeslot 2.

In the first portion of timeslot 2, both managers may again transmit the control data. In the second portion of timeslot 2, Mgr 1 may transmit the control data because Mgr 2 transmitted in the second portion of timeslot 1. Designated proxy broadcasters (not shown) may also transmit the control data in the second portion of timeslot 2.

Timeslot 3 may operate similarly to timeslot 1, timeslot 4 may operate similarly to timeslot 2, and so on.

### Various Notes

Each of the non-limiting aspects above can stand on its own or can be combined in various permutations or combinations with one or more of the other aspects or other subject matter described in this document.

The above detailed description includes references to the accompanying drawings, which form a part of the detailed description. The drawings show, by way of illustration, specific implementations in which the invention can be practiced. These implementations are also referred to generally as "examples." Such examples can include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other implementations can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed implementation. Thus, the following claims are hereby incorporated into the Detailed Description as examples or implementations, with each claim standing on its own as a separate implementation, and it is contemplated that such implementations can be combined with each other in various combinations or permutations. The scope of the invention should be determined with reference to the appended claims, along with the full scope of equivalents to which such claims are entitled.

## Claims

1. A method for proxy broadcasting in a wireless battery management system, the method comprising:
transmitting, by a first manager, control data in a first portion of a timeslot to a plurality of battery clusters on a first channel;
receiving, by a first battery cluster of the plurality of battery clusters, the control data from the first manager in the first portion of the timeslot on the first channel;
transmitting, by the first battery cluster, the control data to a second battery cluster of the plurality of battery clusters in a second portion of the timeslot on a second channel; and
receiving, by a second battery cluster of the plurality of battery clusters, the control data from the first battery cluster in the second portion of the timeslot on the second channel.

2. The method of claim 1, wherein the timeslot includes a timeslot setup portion shared by the first portion and the second portion.

3. The method of any preceding claim, wherein the first channel is a first frequency of a time-synchronous channel hopping (TSCH) scheme, and the second channel is a second frequency of the TSCH scheme.

4. The method of any preceding claim, further comprising:
receiving, by a third battery cluster of the plurality of battery clusters, the control data from the first manager in the first portion of the timeslot on the first channel;
transmitting, by the third battery cluster, the control data to in the second portion of the timeslot,
and optionally wherein the third battery cluster transmits the control data on the second channel or a third channel.

5. The method of any preceding claim, further comprising:
transmitting, by a second manager, the control data in the second portion of the timeslot to the plurality of battery clusters.

6. The method of any preceding claim, further comprising:
transmitting, by a second manager, the control data in the first portion and the second portion of the timeslot to the plurality of battery clusters.

7. A wireless battery management system comprising:
a first manager to transmit control data in a first portion of a timeslot to a plurality of battery clusters on a first channel;
a first battery cluster of the plurality battery clusters to transmit the control data to a second battery cluster of the plurality of battery clusters in a second portion of the timeslot on a second channel; and
the second battery cluster to receive the control data from the first battery cluster in the second portion of the timeslot on the second channel.

8. The wireless battery management system of claim 7, wherein the timeslot includes a timeslot setup portion shared by the first portion and the second portion.

9. The wireless battery management system of claim 7 or claim 8, wherein the first channel is a first frequency of a time-synchronous channel hopping (TSCH) scheme, and the second channel is a second frequency of the TSCH scheme.

10. The wireless battery management system of any of claims 7 to 9, further comprising:
a third first battery cluster of the plurality of battery clusters, to transmit the control data to in the second portion of the timeslot.

11. The wireless battery management system of claim 10, wherein the third battery cluster to transmit the control data on the second channel or a third channel.

12. The wireless battery management system of any of claims 7 to 11, further comprising:
a second manager to transmit the control data in the second portion of the timeslot to the plurality of battery clusters.

13. The wireless battery management system of any of claims 7 to 12, further comprising:
a second manager to transmit the control data in the first portion and the second portion of the timeslot to the plurality of battery clusters.

14. A wireless battery node comprising:
at least one hardware processor; and
at least one memory storing instructions that, when executed by the at least one hardware processor, cause the at least one hardware processor to perform operations comprising:
receiving control data from a first manager in a first portion of a timeslot on a first channel; and
transmitting the control data to a second battery node in a second portion of the timeslot on a second channel.

15. The wireless battery node of claim 14, wherein at least one of the following applies:
(a) the timeslot includes a timeslot setup portion shared by the first portion and the second portion;
(b) the first channel is a first frequency of a time-synchronous channel hopping (TSCH) scheme, and the second channel is a second frequency of the TSCH scheme;
(c) the operations further comprise controlling switching of a H-bridge to generate at least a portion of a discretized alternating current (AC) waveform based on the control data.
